(19) Europäisches Patentamt
European Patent Office
Office européen des brevets

(11) Veröffentlichungsnummer : **0 014 912**
**B1**

(12) **EUROPÄISCHE PATENTSCHRIFT**

(45) Veröffentlichungstag der Patentschrift : **11.05.83**

(21) Anmeldenummer : **80100636.2**

(22) Anmeldetag : **07.02.80**

(51) Int. Cl.³ : **C 08 J 3/22**, C 08 L 75/04, C 09 C 3/10, C 09 B 67/42, C 08 L 67/00

# (54) Verfahren zum Färben von Polyurethan-Kunststoffen.

(30) Priorität : **16.02.79 DE 2905975**

(43) Veröffentlichungstag der Anmeldung : **03.09.80 Patentblatt 80/18**

(45) Bekanntmachung des Hinweises auf die Patenterteilung : **11.05.83 Patentblatt 83/19**

(84) Benannte Vertragsstaaten : **CH DE FR GB IT**

(56) Entgegenhaltungen :
**DE A 2 341 000**
**FR A 921 975**
**GB A 1 202 636**
**NL A 6 814 103**

(73) Patentinhaber : **BAYER AG**
**Zentralbereich Patente, Marken und Lizenzen**
**D-5090 Leverkusen 1, Bayerwerk (DE)**

(72) Erfinder : **Bremer, Fritz, Dr.**
**Paul-Klee-Strasse 64**
**D-5090 Leverkusen (DE)**
Erfinder : **Kressner, Michael**
**Foerstchen 33a**
**D-5653 Leichlingen (DE)**
Erfinder : **Wolf, Karlheinz, Dr.**
**Paul-Klee-Strasse 77**
**D-5090 Leverkusen (DE)**
Erfinder : **Nonn, Konrad, Dr.**
**Otto-Stange-Strasse 17**
**D-5090 Leverkusen (DE)**
Erfinder : **Hörnle, Reinhold, Dr.**
**Hufelandstrasse 42**
**D-5000 Köln 80 (DE)**
Erfinder : **Pape, Georg, Dr.**
**Imbach 43**
**D-5090 Leverkusen 31 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 014 912 B1

Verfahren zum Färben von Polyurethan-Kunststoffen

Die Erfindung betrifft Verfahren zum Färben von Polyurethan-Kunststoffen, dadurch gekennzeichnet, daß man fließfähige Farbstoffpräparationen enthaltend

a) mindestens einen in Wasser schwer- oder unlöslichen Farbstoff,

b) mindestens einen Polyester aus Phthalsäure und einem Polyalkohol sowie gegebenenfalls einem einwertigen Alkohol mit 1-18 C-Atomen,

c) gegebenenfalls weitere Hilfsmittel,

entweder vor der Polyurethanherstellung mit den Polyalkoholen vermischt und anschließend nach bekannten Verfahren durch Umsetzung mit Polyisocyanaten den Polyurethankunststoff herstellt, oder man die Farbstoffpräparationen während der Polyurethanherstellung den Reaktionskomponenten zudosiert.

Aus der NL-A-6 814 103 ist ein Verfahren zum Färben von linearen Polyestern bekannt, bei dem man ein Pigmentkonzentrat einsetzt, das durch Umsetzung einer Pigmentsuspension in Glykol mit Glykolestern zweibasischer Carbonsäuren erhalten worden ist. Die GB-A-1 1 202 636 beschreibt das Färben fertiger Thermoplaste wie Polyamide, Polyolefine und Polyester mit Pigmentpräparationen, die neben dem Pigment Terephthalsäure-diglykolester oder ein lineares Oligomer aus Terephthalsäure und Ethylenglykol oder ein Gemisch solcher Oligomerer, das durch Umesterung von Terephthalsäuredimethylester mit Ethylenglykol erhalten worden ist und gegebenenfalls ein oberflächenaktives Mittel enthalten. Keiner dieser Druckschriften ist ein Hinweis auf das Färben von Polyurethanen während ihrer Herstellung zu entnehmen.

Die erfindungsgemäß eingesetzten Präparationen liegen vorzugsweise in Form von konzentrierten Farbstoffdispersionen vor, die sich aus 5-70 Gew.-% mindestens eines in Wasser schwer- oder unlöslichen Farbstoffs, besonders bevorzugt 10-60 Gew.-%, 30-95 Gew.-5 Polyester, besonders bevorzugt 40-90 Gew.-% und 0-10 Gew.-% weiterer für Pigmentdispersionen übliche Hilfsmittel zusammensetzen. Die Viskosität der fließfähigen Präparationen liegt bevorzugt zwischen etwa 0,3 und etwa 0,8 Pa.s bei Raumtemperatur.

Geeignete, in Wasser schwer- oder unlösliche Farbstoffe sind bevorzugt Pigmente und Farbstoffe, die aufgrund ihrer Konstitution zum Einbau in eine Polyurethankette geeignet sind (Polyurethan-Einbaufarbstoffe), wie amino- oder hydroxylgruppenhaltige Farbstoffe, die den verschiedensten Farbstoffklassen angehören können, beispielsweise der Triphenylmethan-, Oxazin-, Thiazin-, Methin-, Phthalocyanin-, insbesondere aber der Azo- oder Anthrachinonreihe.

Die genannten Farbstoffe besitzen Amino- oder Hydroxylgruppen, die mit den Ausgangskomponenten, insbesondere den Isocyanaten vor, während oder nach der Polyurethanherstellung reagieren können.

Die reaktionsfähige Aminogruppe kann primär oder sekundär sein. Bevorzugt sind primäre Aminogruppen ; diese können direkt an einem aromatischen Kern des Farbstoffmoleküls sitzen oder über eine Alkylenbrücke mit dem Farbstoffmolekül verbunden sein. Die Alkylenbrücke kann ihrerseits direkt oder über $—CO—$, $—CO_2—$, $—SO_2—$, $—CONH—$, $—NH—$ oder $—SO_2NH—$ an den Farbstoffrest gebunden sein.

Die reaktionsfähige Hydroxylgruppe liegt bevorzugt in einem Oxyalkylrest vor. Dieser kann direkt an einen aromatischen Kern gebunden sein, beispielsweise als Oxymethylrest oder über ein Brückenatom, beispielsweise eine Sauerstoff-, Schwefel- oder Stickstoffbrücke, wie z. B. in den Gruppen $—O—CH_2—CH_2—OH$, $—S—CH_2—CH_2—OH$,

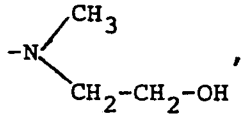 , 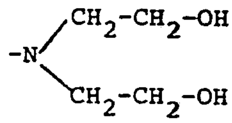 , $-CO-O-CH_2-CH_2-OH$ oder

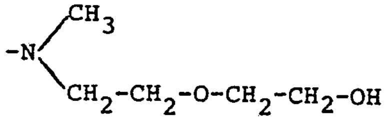

oder

Geeignete Farbstoffe der verschiedenen Farbstoffreihen sind aus der DE-A 1 114 317 bekannt.

Geeignete Pigmente sind bevorzugt organische Pigmente, z. B. solche der Azo-, Anthrachinon-, Azaporphin-, Thioindigo- oder polycyclischen Reihe, ferner der Chinacridon-, Dioxazin-, Naphthalintetracarbonsäure- oder Perylentetracarbonsäure-Reihe, sowie verlackte Farbstoffe, wie Ca, Mg, Al-Lacke von sulfonsäure- und/oder carbonsäuregruppenhaltigen Farbstoffen, von denen eine große Zahl beispielsweise aus Colour-Index, 2. Auflage bekannt sind. Des weiteren seien anorganische Pigmente, wie

Zinksulfide, Cadmiumsulfide/-selenide, Ultramarin, Titandioxide, Eisenoxide, Nickel- oder Chromtitangelb, Kobaltblau, Chromoxide und Chromatpigmente sowie Ruß genannt.

Die erfindungsgemäß verwendeten Polyester haben vorzugsweise Molekulargewichte zwischen 300 und 800 g $mol^{-1}$, bevorzugt zwischen 400 und 600 g $mol^{-1}$ und eine Viskosität von 1,5-3 Pa.s, vorzugsweise 1,8-2,8 Pa.s bei Raumtemperatur. Sie werden in bekannter Weise durch Umsetzung von Phthalsäure und Polyalkoholen, gegebenenfalls im Gemisch mit einwertigen Alkoholen mit 1-18 C-Atomen, erhalten.

Als Polyalkohole können z. B. Glykol, Diethylenglykol, Butandiol-1,4, Butendiol-1,4, Butindiol-1,4, Hexandiol-1,6, Octandiol-1,8, Trimethylolpropan, Glycerin, Pentaerythrit, Sorbit, Saccharose oder bevorzugt Triethylenglykol eingesetzt werden.

Als Beispiele für einwertige Alkohole mit 1-18 C-Atomen seien genannt :

Methanol, Ethanol, n-Propanol, i-Propanol, Allylalkohol, Crotylalkohol, n-Butanol, i-Butanol, sec-Butanol, t-Butanol, n-Amylalkohol, Neopentylalkohol, n-Hexylalkohol, n-Octylalkohol, Caprylalkohol, n-Decylalkohol, Laurylalkohol, Myristylalkohol.

Ganz besonders bevorzugt werden in die erfindungsgemäß einsetzbaren Präparationen Polyester eingesetzt, die durch Kondensation von Phthalsäure, Triethylenglykol und Nonylalkohol bzw. i-Nonylalkohol erhalten worden sind.

Als weitere Hilfsmittel, die gegebenenfalls in den Farbstoffpräparationen vorhanden sein können, seien beispielhaft genannt: Anionische, kationische und nichtionogene Tenside, hochmolekulare Kieselsäuren, spezielle Montmorillonite, die auch organische Ammoniumsalze enthalten können sowie aus der Kunststofftechnik bekannte Weichmacher wie Ester der Phthalsäure oder Phosphorsäure mit einwertigen Alkoholen.

Die Herstellung der Farbstoffdispersionen erfolgt in üblichen Naßzerkleinerungsaggregaten, wie Attritoren, Walzenstühlen, Dissolvern, Rotor-Stator-Mühlen, Korundscheibenmühlen, Kugelmühlen sowie mit besonderem Vorteil in schnell-laufenden Rührwerksmühlen.

Insbesondere eignen sich die Farbstoffdispersionen zum Färben von Polyurethan-Schaumstoffen, die eine gleichmäßige Porenstruktur und Farbtiefe erhalten sollen.

Beispiel 1

Eine schwarze Farbstoffpräparation aus 18 g Farbruß, 10 g Tri-N-Butylphosphat und 72 g eines Polyesters, der ein Umsetzungsprodukt aus Phthalsäure, Triethylenglykol und Isononylalkohol ist und ein OH-Zahl von 300-320 besitzt wird wie folgt hergestellt :

Über Dosierschnecken werden Ruß, Tri-N-Butylphosphat und Polyester in eine schnellaufende, mit Stahlperlen beschickte, kontinuierlich arbeitende Rührwerksmühle eingetragen. Man erhält eine fließfähige Farbpaste, die für die Einfärbung von Polyurethan-Schaum geeignet ist. Die Molmasse des in Beispiel 1 verwendeten Polyesters liegt im Bereich von 400-600 g-$mol^{-1}$ ; seie Zähigkeit bei 2,0-2,5 Pa.s bei 20 °C.

Beispiel 2

18 g Pigment Yellow 17, 9 g Tri-N-Butylphosphat und 73 g des in Beispiel 1 beschriebenen Polyesters werden homogenisiert und in eine kontinuierlich arbeitenden Rührwerksmühle gemahlen. Man erhält eine farbstarke, fließfähige Farbpaste.

Beispiel 3

15 g eines Azofarbstoffes aus 5-Amino-3-phenyl-1,2,4-thiadiazol und N,N-Dioxethyl-m-toluidin, 9 g Tri-N-Butylphosphat und 76 g des in Beispiel 1 beschriebenen Polyesters werden homogenisiert und in einer kontinuierlich arbeitenden Rührwerksmühle gemahlen. Man erhält eine fließfähige Farbpaste.

Beispiel 4

90 g eines linearen Polyesterpolyols der OH-Zahl 56 und einer Viskosität von 0,6 Pa.s bei 75 °C werden mit 15 Teilen eines Vernetzers, der im wesentlichen aus Wasser, Butandiol und Aktivator besteht, und 2,5 g der in Beispiel 1 beschriebenen Schwarzpaste gemischt und mit einem Isocyanatpräpolymer, das aus einem Polyester und 4,4'-Diisocyanato-diphenylmethan hergestellt wurde und einen NCO-Gehalt von 19 Gew.-% aufweist, in der stöchiometrischen Menge zu einem Formteil aufgeschäumt. Dieses eingefärbte Formteil aus halbhartem Polyurethan-Integralschaumstoff mit einer Rohdichte von 0,6 g $cm^{-3}$ kann nach 5 Minuten Formstandzeit entformt werden.

Beispiel 5

78 g eines Polyethers mit einer OH-Zahl von 35 und einer Viskosität von 0,825 Pa.s bei 25 °C, 10 g der in Beispiel 1 beschriebenen Rußpaste, ein Gemisch von 6 g Butandiol-1,4, 3 g Ethylenglykol und 2 g

Trimethylolpropan als Vernetzer, 0,45 g Triethylendiamin als Katalysator und ein Gemisch von 0,2 g Wasser, 8 g Trichlormonofluormethan und 4 g Methylenchlorid als Treibmittel werden gut vermischt und in ein Dosiermischaggregat eingegeben. Als zweite Komponente kommt in das Dosiergerät ein modifiziertes 4,4'-Diphenylmethan-diisocyanat. Beide Komponenten werden intensiv vermischt und in eine vorbereitete Schäumform eingetragen, in der dann ein Polyurethan-Integralschaumstoff-Formteil entsteht, das nach ca. 5 Minuten entformt werden kann. Das so hergestellte Teil hat eine Rohdichte von 0,3 g/$cm^3$ und unterscheidet sich in seinen mechanischen Eigenschaften (z. B. Bruchdehnung, Zugfestigkeit, Stauchhärte, Druckverformungsrest) nicht von einem nicht eingefärbten Teil.

Beispiel 6

100 g eines Polyolgemisches der OH-Zahl 495 und einer Viskosität von 0,115 Pa.s bei 25 °C, bestehend aus 80 g eines Polyethers der OH-Zahl 550, der durch Anlagerung von Ethylenoxid an Trimethylolpropan erhalten wurde, und 20 g eines Polyesters der OH-Zahl 370, der durch Umsetzung von 1 Mol Adipinsäure, 2,6 Mol Phthalsäureanhydrid, 1,3 Mol Ölsäure und 6,9 Mol Trimethylolpropan erhalten wurde, werden mit 1 g eines Polysiloxan-Polyalkylenoxid-Blockcopolymerisats als Schaumstabilisator, 0,5 g Tetramethylguanidin als Katalysator, 5 g Monofluortrichlormethan als Treibmittel und 5 g einer in Beispiel 1-3 beschriebenen Farbstoffpräparation vermischt. Das Gemisch wird einem Zweikomponenten-Dosiermischgerät zugeführt und dort zur Herstellung des aufschäumenden Reaktionsgemisches mit 155 g eines Polyisocyanates, das durch Phosgenierung von Anilin-Formaldehyd-Kondensaten und anschließende Umsetzung mit einem Diol der OH-Zahl 480 erhalten wurde, eine Viskosität von 0,13 Pa.s bei 25 °C und einen NCO-Gehalt von 28 Gew.-% aufweist, intensiv vermischt und sofort in ein auf 60 °C temperiertes Metallwerkzeug eingetragen. Nach 7 Minuten Entformungszeit kann das eingefärbte Formteil aus hartem Polyurethan-Integralschaumstoff mit einer Rohdichte von 0,6 g/$cm^3$ entformt werden. Verglichen mit einem nicht eingefärbten, rohen Formteil sind die mechanischen Eigenschaften (-Modul, Biegefestigkeit, Bruchdehnung, Schlagzähigkeit, Formbeständigkeit in der Wärme usw.) des eingefärbten Formteiles nicht erniedrigt.

**Ansprüche**

1. Verfahren zum Färben von Polyurethan-Kunststoffen, dadurch gekennzeichnet, daß man fließfähige Farbstoffpräparationen enthaltend

a) mindestens einen in Wasser schwer- oder unlöslichen Farbstoff,

b) mindestens einen Polyester aus Phthalsäure und einem Polyalkohol sowie gegebenenfalls einem einwertigen Alkohol mit 1-18 C-Atomen,

c) gegebenenfalls weitere Hilfsmittel,

entweder vor der Polyurethanherstellung mit den Polyalkoholen vermischt und anschließend nach bekannten Verfahren durch Umsetzung mit Polyisocyanaten den Polyurethankunststoff herstellt, oder man die Farbstoffpräparationen während der Polyurethanherstellung den Reaktionskomponenten zudosiert.

2. Verfahren gemäß Anspruch 1, dadurch gekennzeichnet, daß man Farbstoffpräparationen bestehend aus 5-70 Gew.-% mindestens eines in Wasser schwer- oder unlöslichen Farbstoffs, 30-95 Gew.-% mindestens eines Polyesters aus Phthalsäure und einem Polyalkohol sowie gegebenenfalls einem einwertigen Alkohol mit 1-18 C-Atomen und 0-10 Gew.-% weiterer für Pigmentdispersionen übliche Hilfsmittel einsetzt.

3. Verfahren gemäß den Ansprüchen 1 und 2, dadurch gekennzeichnet, daß man Farbstoffpräparationen einsetzt, die ein Pigment oder einen Polyurethan-Einbaufarbstoff enthalten.

4. Verfahren gemäß den Ansprüchen 1 bis 3, dadurch gekennzeichnet, daß man Farbstoffpräparationen einsetzt, die einen Polyester mit einem Molekulargewicht zwischen 300 und 800 g $mol^{-1}$, bevorzugt zwischen 400 und 600 g $mol^{-1}$ und einer Viskosität zwischen 1,5-3 Pa.s, vorzugsweise 1,8-2,8 Pa.s enthalten.

5. Verfahren gemäß den Ansprüchen 1 bis 4, dadurch gekennzeichnet, daß man Farbstoffpräparationen einsetzt, die einen Polyester aus Phthalsäure, Triethylenglykol und einem Nonyl- bzw. i-Nonylalkohol enthalten.

**Claims**

1. Process for dyeing polyurethane plastics, characterised in that dyestuff preparations which are capable of flow and contain

a) at least one dyestuff which is sparingly soluble or insoluble in water,

b) at least one polyester of phthalic acid and a polyalcohol and optionally a monohydric alcohol with 1-18 C atoms and

c) optionally further auxiliaries,

are either mixed with the polyalcohols before the production of the polyurethane and the polyurethane plastic is then produced according to known processes by reaction with polyisocyanates, or the dyestuff preparations are metered into the reaction components during the production of the polyurethane.

2. Process according to Claim 1, characterised in that dyestuff preparations consisting of 5-70 % by weight of at least one dyestuff which is sparingly soluble or insoluble in water, 30-95 % by weight of at least one polyester of phthalic acid and a polyalcohol and optionally a monohydric alcohol with 1-18 C atoms and 0-10 % by weight of further auxiliaries customary for pigment dispersions are used.

3. Process according to Claims 1 and 2, characterised in that dyestuff preparations are used which contain a pigment or a polyurethane incorporation dyestuff.

4. Process according to Claims 1 to 3, characterised in that dyestuff preparations are used which contain a polyester with a molecular weight of between 300 and 800 g $mol^{-1}$, preferably between 400 and 600 g $mol^{-1}$, and a viscosity of between 1.5-3 Pa.s, preferably 1.8-2.8 Pa.s.

5. Process according to Claims 1 to 4, characterised in that dyestuff preparations are used which contain a polyester of phthalic acid, triethylene glycol and a nonyl or i-nonyl alcohol.

**Revendications**

1. Procédé pour colorer des résines synthétiques de polyuréthannes, caractérisé en ce que l'on mélange des compositions de colorants fluides contenant

a) au moins un colorant peu soluble ou insoluble dans l'eau,

b) au moins un polyester de l'acide phtalique et d'un polyalcool et le cas échéant d'un monoalcool en C1-C18,

c) éventuellement d'autres produits auxiliaires,

avec les polyalcools, avant la préparation du polyuréthanne, et on prépare ensuite la résine synthétique de polyuréthanne par réaction avec des polyisocyanates selon des techniques connues, ou bien on introduit la composition de colorant dans les composants de réaction au cours de la préparation du polyuréthanne.

2. Procédé selon la revendication 1, caractérisé en ce que l'on utilise une composition de colorant consistant en 5 à 70 % en poids au moins d'un colorant peu soluble ou insoluble dans l'eau, 30 à 95 % en poids d'au moins un polyester de l'acide phtalique et d'un polyalcool et le cas échéant d'un monoalcool en C1-C18, et 0 à 10 % en poids d'autres produits auxiliaires usuels pour les dispersions de pigments.

3. Procédé selon les revendications 1 et 2, caractérisé en ce que l'on utilise des compositions de colorants qui contiennent un pigment ou un colorant incorporable dans les polyuréthannes.

4. Procédé selon les revendications 1 à 3, caractérisé en ce que l'on utilise des compositions de colorants qui contiennent un polyester de poids moléculaire 300 à 800 g $mole^{-1}$, de préférence de 400 à 600 g $mole^{-1}$, et une viscosité de 1,5 à 3 Pa.s, de préférence de 1,8 à 2,8 Pa.s.

5. Procédé selon les revendications 1 à 4, caractérisé en ce que l'on utilise des compositions de colorants qui contiennent un polyester de l'acide phtalique, du triéthylèneglycol et d'un alcool nonylique ou isononylique.